Europäisches Patentamt

European Patent Office

Office européen des brevets

(11) Numéro de publication : **0 517 587 A1**

# (12) DEMANDE DE BREVET EUROPEEN

(21) Numéro de dépôt : **92401517.5**

(22) Date de dépôt : **03.06.92**

(51) Int. Cl.$^5$ : **G01B 7/30,** F02D 41/24, G01D 5/24, G01D 5/20

(30) Priorité : **05.06.91 FR 9106815**

(43) Date de publication de la demande :
**09.12.92 Bulletin 92/50**

(84) Etats contractants désignés :
**AT BE CH DE DK ES FR GB GR IT LI LU NL PT SE**

(71) Demandeur : **IMPHY S.A.**
**Immeuble Elysées La Défense, 29 Le Parvis - La Défense 4**
**F-92072 Puteaux (FR)**

(72) Inventeur : **Berna, Michel**
**Les Belons**
**F-03230 Lusigny (FR)**

(74) Mandataire : **Habasque, Etienne Joel Jean-François**
**Cabinet Lavoix 2, Place d'Estienne d'Orves**
**F-75441 Paris Cédex 09 (FR)**

(54) **Dispositif de mesure de la position angulaire d'un volet de charge d'un moteur à injection électronique.**

(57) Ce dispositif de mesure de la position angulaire d'un volet de charge d'un moteur à injection électronique, dans lequel le volet (1) est disposé dans une tubulure d'admission (2) de gaz dans le moteur et est mobile en rotation autour d'un axe de volet (X-X) s'étendant à peu près perpendiculairement à la tubulure (2) et comportant des moyens (3) de mesure de la position du volet (1), disposés à l'extérieur de la tubulure (2) et dont une partie est mobile en rotation avec le volet, est caractérisé en ce que les moyens de mesure comprennent un inducteur électromagnétique (6) alimenté par un signal variable et un induit électromagnétique (7), mobiles en rotation l'un par rapport à l'autre, en fonction de la position du volet (1) et dont le coefficient de couplage électromagnétique est variable en fonction de leur position relative, pour faire varier la tension induite par l'inducteur dans l'induit et des moyens de traitement du signal de sortie de l'induit pour déterminer la position angulaire du volet.

FIG·1

EP 0 517 587 A1

La présente invention concerne un dispositif de mesure de la position angulaire d'un volet de charge d'un moteur à injection électronique.

Dans le domaine des moteurs à injection à allumage électronique, un calculateur qui est placé à bord d'un véhicule automobile, détermine, à partir d'informations fournies par différents capteurs, le moment où se produit l'étincelle.

Entre deux allumages, ce calculateur définit l'angle d'avance à l'allumage en se basant sur des informations de charge, à savoir de régime du moteur, de sa température et de la position du volet de charge de celui-ci.

Ainsi, pour chaque état de marche du véhicule, le dispositif de régulation électronique permet d'optimiser la combustion, c'est à dire que le moteur brûle un mélange air-carburant dans des proportions dites stoechiométriques.

Ceci a pour effet de faire fournir une puissance optimale au moteur pour une consommation minimale et il s'ensuit une diminution de la pollution atmosphérique due aux gaz d'échappement, du fait de la faible quantité de gaz imbrûlés en fin de combustion.

Le volet de charge est disposé dans une tubulure d'admission de gaz du moteur et est mobile en rotation autour d'un axe de volet, s'étendant à peu près perpendiculairement à la tubulure et il est indispensable de connaître avec exactitude la position de ce volet autour de son axe de rotation pour obtenir les avantages mentionnés précédemment.

Plus particulièrement, la position du volet doit être déterminée de manière très précise entre la position de repos, à savoir volet fermé et une position active à la suite d'une rotation de 10° par exemple de celui-ci, la précision demandée étant de l'ordre de 0,1° sur cette plage de positions angulaires.

En effet, dans cette plage, les turbulences induites par l'air ont une grande influence sur la position du volet du fait de la réduction du passage au droit du volet et de la tubulure dans laquelle il est monté.

Il convient également de noter que la position du volet est influencée par les variations de température, le phénomène d'hystérésis qui prend naissance entre l'ouverture et la fermeture du volet ainsi que par les jeux mécaniques.

En outre, la détection de la position angulaire du volet de charge doit être assurée sur une plage de rotation d'environ 90°, mais hors de la plage de rotation des 10°, mentionnée précédemment, le volet de charge est moins sensible aux phénomènes extérieurs.

Actuellement, les dispositifs de mesure de la position de ce volet, tels qu'on les connaît dans l'état de la technique, comprennent des moyens de mesure qui sont disposés à l'extérieur de la tubulure et qui comprennent un potentiomètre électrique dont une partie est mobile en rotation avec le volet.

En effet, ce potentiomètre comprend un rotor relié par une extrémité par exemple à l'axe de rotation du volet de charge, tandis que son autre extrémité est munie d'un curseur qui glisse sur une piste en forme de couronne et qui est recouverte d'un dépôt de résistances chimiques.

Pour une position angulaire donnée du volet, le contact du curseur sur la piste à un endroit déterminé de celle-ci, correspond à une valeur de tension représentative de cette position et qui est transmise au calculateur de bord du véhicule.

Un tel dispositif permet d'obtenir la précision souhaitée au voisinage de la position de repos du volet sur une plage de rotation d'environ 10°.

Cependant, ces dispositifs présentent un certain nombre d'inconvénients.

En effet, on a pu constater que le contact glissant établi par le curseur sur la piste se dégrade par exemple par usure, ce qui entraîne l'apparition d'une résistance de contact supplémentaire, perturbant considérablement les mesures.

Cette dégradation du contact peut conduire jusqu'à la panne du véhicule.

Le but de l'invention est donc de résoudre ces problèmes en proposant un dispositif de mesure de la position angulaire d'un volet de charge d'un moteur à injection électronique permettant de s'affranchir d'un contact mécanique glissant et fournissant la précision de mesure souhaitée pour une rotation du volet d'amplitude déterminée.

A cet effet, l'invention a pour objet un dispositif de mesure de la position angulaire d'un volet de charge d'un moteur à injection électronique, dans lequel le volet est disposé dans une tubulure d'admission de gaz dans le moteur et est mobile en rotation autour d'un axe de volet, s'étendant à peu près perpendiculairement à la tubulure et comportant des moyens de mesure de la position du volet, disposés à l'extérieur de la tubulure et dont une partie est mobile en rotation avec le volet, caractérisé en ce que les moyens de mesure comprennent un inducteur électromagnétique alimenté par un signal variable et un induit électromagnétique, mobiles en rotation l'un par rapport à l'autre en fonction de la position du volet et dont le coefficient de couplage électromagnétique est variable en fonction de leur position relative pour faire varier la tension induite par l'inducteur dans l'induit et des moyens de traitement du signal de sortie de l'induit pour déterminer la position angulaire du volet.

L'invention présente également les caractéristiques suivantes :

- l'inducteur est relié au volet tandis que l'induit est relié à la tubulure;
- l'inducteur comporte un noyau magnétique autour duquel est disposé au moins un bobinage alimenté par le signal variable;
- l'induit comporte un noyau magnétique sur lequel est disposé au moins un bobinage aux bornes duquel sont connectés les moyens de traitement permettant de déterminer la position angulaire du volet;

Selon d'autres caractéristiques, le barreau de l'inducteur est disposé dans un plan à peu près perpendiculaire à l'axe de volet et le tore est également disposé dans un plan à peu près perpendiculaire à cet axe.

L'invention sera mieux comprise à l'aide de la description qui va suivre, donnée uniquement à titre d'exemple et faite en se référant aux dessins annexés, sur lesquels :

- la Fig.1 représente une vue schématique en coupe transversale d'un premier mode de réalisation d'un dispositif selon l'invention;

- les Fig.2 et 3 représentent des vues schématiques partielles de dessus du dispositif représenté sur la Fig.1, dans deux positions mécaniques relatives d'un barreau d'inducteur et d'un tore d'induit;

- la Fig.4 représente une courbe illustrant la tension de sortie de l'induit d'un dispositif selon l'invention, en fonction des différentes positions angulaires occupées par le volet de charge; et

- la Fig.5 représente une vue schématique partielle en perspective d'un second mode de réalisation d'un dispositif de mesure selon l'invention.

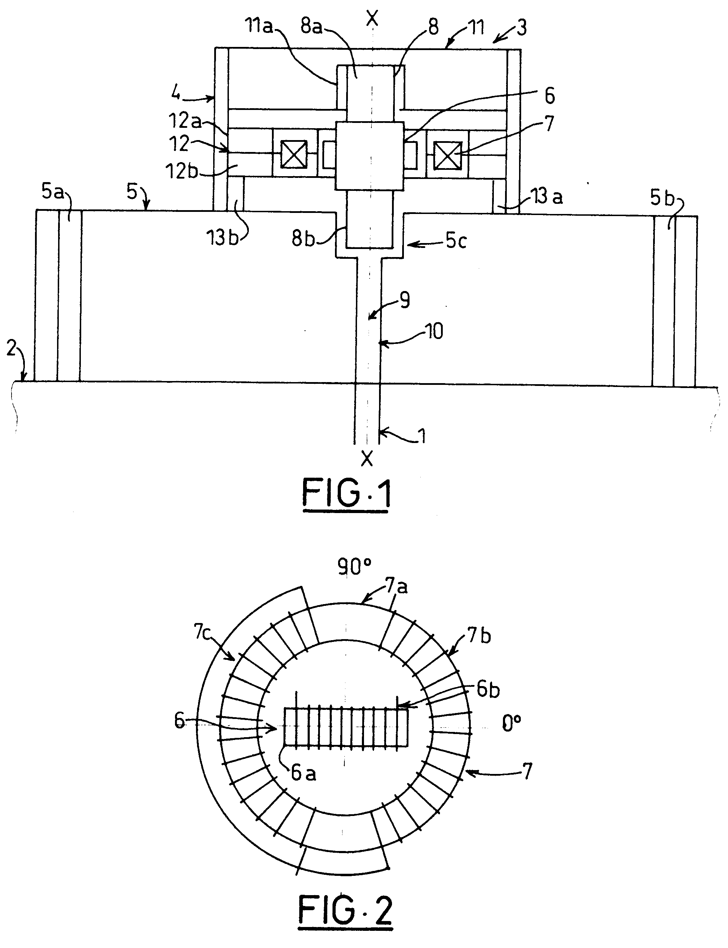

Ainsi qu'on peut le voir sur les Fig.1, 2 et 3, un dispositif de mesure selon l'invention est adapté pour mesurer la position angulaire d'un volet de charge 1 d'un moteur à injection électronique non représenté. Ce volet de charge est disposé dans une tubulure 2 d'admission de gaz dans le moteur et est mobile en rotation autour d'un axe de volet X-X s'étendant à peu près perpendiculairement à l'axe de la tubulure. Cette structure de volet de charge est bien connue dans l'état de la technique et ne sera pas décrite plus en détails.

Le dispositif de mesure selon l'invention comporte également des moyens 3 de mesure de la position angulaire du volet, disposés à l'extérieur de la tubulure et dont une partie est mobile en rotation avec le volet.

Ces moyens de mesure sont disposés dans un boîtier 4 à l'extérieur de la tubulure, ce boîtier 4 étant fixé sur une embase 5 elle-même fixée sur la tubulure par tout moyen approprié.

Les moyens de mesure comprennent un inducteur électromagnétique 6 alimenté par un signal variable et un induit 7, mobiles en rotation l'un par rapport à l'autre en fonction de la position du volet.

En effet, alors que l'induit 7 est relié au boîtier 4 et à l'embase 5 fixée sur la tubulure, l'inducteur 6 est porté par une structure de support 8 déplaçable à rotation dans le boîtier 4 par le volet 1. Cette structure de support 8 est reliée à ce volet par l'intermédiaire d'une tige de liaison 9 s'étendant dans un trou 10 de l'embase 5. On conçoit donc que lorsque le volet se déplace angulairement dans la tubulure, la structure de support 8 et l'inducteur 6 tournent également dans le boîtier 4 et se déplacent par rapport à l'induit 7 qui est porté par la partie fixe du dispositif.

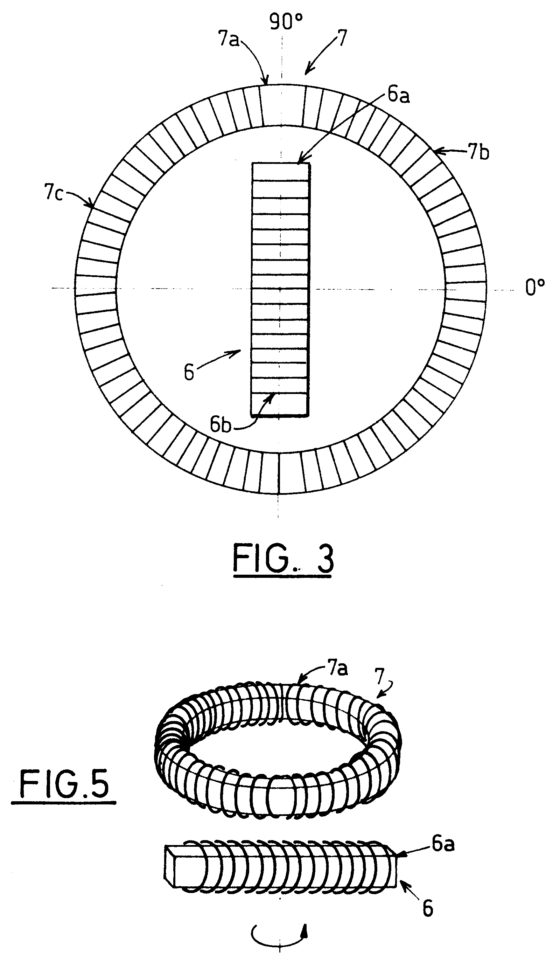

Comme on peut le voir sur les Fig. 2 et 3, l'inducteur 6 comporte un noyau magnétique 6a autour duquel est disposé au moins un bobinage 6b alimenté par un signal variable. Ce noyau magnétique est en fait un barreau à peu près parallélépipédique réalisé dans un alliage doux de champ coercitif inférieur à 120 A/m qui est disposé dans un plan à peu près perpendiculaire à l'axe de volet X-X, dans l'induit 7. Le barreau peut avoir également une forme cylindrique.

Cet induit comporte également un noyau magnétique 7a autour duquel est disposé au moins un bobinage 7b.

Le noyau magnétique 7a de l'induit 7 se présente sous la forme d'un tore constitué d'au moins une rondelle de matériau magnétique qui est également réalisée dans un alliage doux de champ coercitif inférieur à 1,2 A/m. Ce tore est également disposé dans un plan à peu près perpendiculaire à l'axe X-X de rotation du volet et s'étend symétriquement autour de l'inducteur dans cet exemple de réalisation.

Ces moyens de mesure sont basés sur le principe électromagnétique de la variation de l'inductance mutuelle entre l'inducteur et l'induit en fonction de leur position mécanique relative.

En effet, le coefficient de couplage électromagnétique entre l'inducteur et l'induit est variable en fonction de leur position relative pour faire varier la tension induite par l'inducteur dans l'induit.

Le signal variable d'alimentation de l'inducteur crée en circulant dans le bobinage de ce dernier, un flux magnétique qui varie en fonction du coefficient d'inductance mutuelle entre cet inducteur et cet induit. Pour chaque coefficient d'inductance mutuelle, l'induit est le siège d'une force électromotrice induite variable, représentative de la position angulaire de l'inducteur par rapport à l'induit et donc du volet dans la tubulure et le traitement de cette force électromotrice par des moyens électroniques classiques permet d'obtenir avec précision la position angulaire du volet de charge et de transmettre cette position au calculateur embarqué à bord du véhicule, pour assurer la régulation de l'injection.

Le dispositif selon l'invention permet donc de détecter la position angulaire du volet de charge sans utiliser de contact mécanique susceptible de s'endommager au cours du temps et de perturber les mesures.

Comme cela est représenté sur les figures 2 et 3 et comme mentionné précédemment, l'inducteur comporte le noyau magnétique 6a sur lequel est disposé le bobinage 6b qui est alimenté par le signal variable d'entrée. Ce signal variable peut être de type alternatif sinusoïdal ou un signal impulsionnel, etc...

On notera que l'embase 5 de fixation de l'ensemble du dispositif sur la tubulure présente également une forme générale parallélépipédique et est fixée sur la tubulure par l'intermédiaire par exemple de vis traversant des trous 5a et 5b à chaque extrémité de celle-ci, d'axes parallèles au trou 10 de passage de la tige de liaison du volet à la structure de support 8 de l'inducteur 6.

Le boîtier 4 est fixé sur cette embase, par exemple par soudage et présente une forme tubulaire.

On notera que la structure de support 8 peut comporter dans sa partie centrale un logement de réception de l'inducteur tandis que ses extrémités 8a, 8b sont adaptées pour s'engager dans des évidements de guidage respectivement 5c de l'embase et 11a, d'un couvercle 11 de fermeture du boîtier 4.

Ce boîtier 4 comporte également une structure de fixation de l'induit désignée par la référence générale 12 sur cette figure. Cette structure présente une forme générale torique et comporte deux parties disposées l'une au-dessus de l'autre et désignées par les références 12a et 12b, dans lesquelles vient se loger l'induit.

Cette structure de support s'étend donc autour de l'inducteur et est maintenue en position dans le boîtier par l'intermédiaire d'épaulement 13a et 13b prévus sur la surface correspondante de l'embase 5 et la paroi interne de ce boîtier 4.

On notera également que le couvercle 11 comporte les moyens d'alimentation de l'inducteur et les moyens de traitement du signal obtenu en sortie de l'induit.

Les moyens d'alimentation du bobinage de l'inducteur sont de type classique et délivrent par exemple un courant sinusoïdal de 15 mA crête à crête, ce qui correspond à une valeur moyenne inférieure à 10 mA, débité par des moyens d'alimentation à tension continue de 5 volts fournie à partir de la batterie du véhicule.

Un tel signal sinusoïdal d'alimentation est obtenu de manière classique par transformation du signal d'alimentation délivré par la batterie du véhicule.

Cette valeur est conditionnée par le fait qu'un nombre élevé de capteurs sont embarqués à bord du véhicule et nécessitent une puissance non négligeable de batterie.

Aussi convient-il de limiter la consommation électrique de chaque capteur à 10 mA.

Le signal de sortie de l'induit est transformé par des moyens classiques de traitement de signaux en un signal utilisable par un calculateur, à savoir une tension continue.

C'est ainsi par exemple que ces moyens de traitement peuvent comporter un détecteur de crête en série avec un amplificateur.

Comme on peut le voir sur les Fig.2 et 3, il peut être avantageux dans certains cas de disposer de manière symétrique deux bobinages 7b et 7c sur le tore 7a de l'induit afin de doubler la sensibilité des moyens de mesure.

En effet, dans une plage d'amplitude de 10°, autour de la position de repos du volet de charge, telle que celle représentée sur la Fig.2, et qui correspond à un angle égal à 0, la précision souhaitée pour les moyens de mesure est de l'ordre de 0,1°, de sorte que la sensibilité des moyens de mesure doit être ausi élevée que possible.

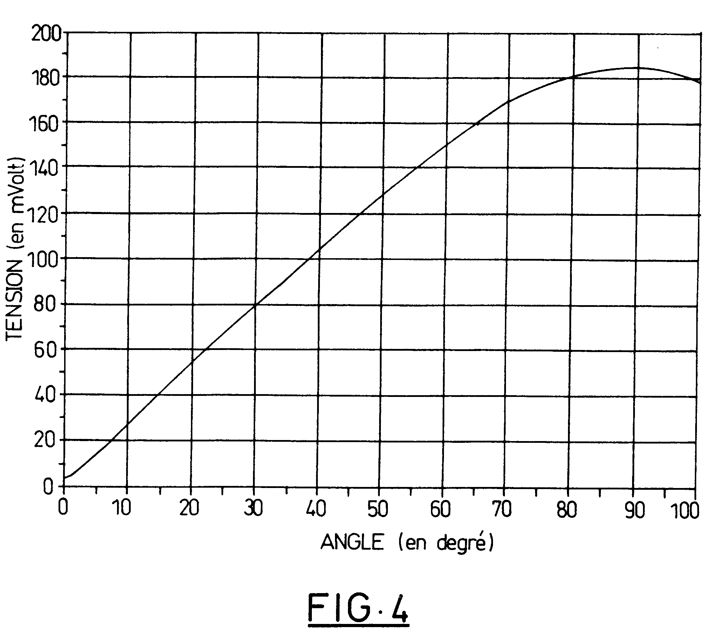

L'utilisation des deux bobinages d'induit permet d'obtenir des valeurs crêtes de la tension de sortie de l'induit variant entre 0 et 200 mV comme on peut le voir sur la figure 4, ce qui permet de réduire l'influence des parasites sur les mesures.

Ce signal est obtenu pour une fréquence d'alimentation de 5000 Hz.

Par ailleurs, cette sensibilité est également améliorée en augmentant la densité des spires des bobinages en regard de chacune des extrémités du barreau de l'inducteur lorsque celui-ci est dans une position correspondant à la position de repos du volet de charge.

Dans cette position représentée sur la Fig.2, le coefficient d'inductance mutuelle prend une valeur minimale alors que dans la position angulaire d'ouverture maximale du volet dans la tubulure, telle que celle représentée sur la figure 3, ce coefficient prend une valeur maximale.

Pour les valeurs élevées de mesure d'angle, correspondant à des positions de volet de charge voisines de celles représentées sur la figure 3, les moyens de mesure affichent une sensibilité moindre non préjudiciable pour l'application.

Par ailleurs, la répartition symétrique des bobinages d'induit sur le tore, par rapport aux positions extrêmes du barreau d'inducteur, permet de compenser avantageusement l'évolution potentielle de l'entrefer entre le tore d'induit et les extémités du barreau d'inducteur.

Sans cette compensation, l'évolution de l'entrefer conduit à des réductions de la sensibilité et à des erreurs de mesure.

Selon un autre mode de réalisation du dispositif de mesure selon l'invention, le noyau d'inducteur peut être constitué par un tore autour duquel est disposé au moins un bobinage alimenté par le signal variable d'entrée, tandis que le noyau d'induit est formé par un barreau sensiblement parallélépipédique muni d'au moins un bobinage aux bornes duquel est délivré le signal de sortie représentatif de la position angulaire du volet dans la tubulure.

A titre d'exemple, les différents composants du dispositif de mesure selon l'invention peuvent présenter les dimensions suivantes.

Le barreau d'inducteur 6a peut être constitué par un empilage par exemple d'une dizaine de tôles en alliage magnétique, de 0,3 mm d'épaisseur dont chacune a pour dimensions 12 x 3 mm.

Le bobinage d'inducteur est formé de 800 spires d'un fil de 0,1 mm de diamètre.

Le tore d'induit peut être constitué par un empilement de rondelles toriques en alliage magnétique.

Ces rondelles peuvent être par exemple au nombre de dix et présenter les dimensions suivantes :
- épaisseur 0,3 mm,
- diamètre intérieur 16mm,
- diamètre extérieur 20 mm.

Il convient de noter que cette méthode de fabrication du tore d'induit est avantageuse compte tenu du fait que la mesure d'angle que l'on souhaite effectuer se veut précise et donc impose également une précision dans la fabrication du dispositif.

La constitution d'un tore par enroulement de bandes ne convient donc pas du fait de son imprécision et de la présence d'un entrefer entre chaque tour du tore.

Le tore peut également être formé d'un tube cylindrique, par exemple de diamètres intérieur et extérieur, respectivement de 16 et 17 mm.

Par ailleurs, il y a également lieu de choisir des rondelles de plus de quelques dixièmes de millimètres d'épaisseur, afin de ne pas accentuer l'influence des courants induits et des phénomènes de pénétration lorsque la fréquence du signal d'alimentation est élevée.

Sur ce tore, sont disposés symétriquement par exemple deux bobinages comprenant 150 spires d'un fil de diamètre de 0,1 mm.

Ce dimensionnement est choisi pour que l'influence de la température sur la résistance des spires soit négligeable par rapport à la valeur de la réactance de chaque bobinage.

L'alliage magnétique dans lequel est réalisé ce tore est un alliage doux dont le champ coercitif est inférieur à 1,2 A/m, ce qui permet de conserver une hystérésis de rotation inférieure à la précision souhaitée, à savoir de 0,1°.

En effet, au cours de la rotation du volet de charge et donc du barreau d'inducteur, il apparaît une hystérésis qui dépend de la valeur de l'hystérésis magnétique du tore, de sorte qu'il y a lieu de limiter cette dernière au maximum.

Un alliage à 80% de nickel, 6% de molybdène et 14% de fer, convient parfaitement à cette application.

En outre, il a été constaté qu'une variation de la température entraîne une variation des dimensions du tore et du barreau conduisant à une évolution de l'entrefer entre les extrémités du barreau et le tore, ce qui introduit une variation de la sensibilité des moyens de mesure.

Le noyau magnétique du barreau d'inducteur est réalisé dans un alliage doux de champ coercitif inférieur à 120 A/m afin de limiter la consommation en courant électrique de magnétisation.

De manière avantageuse, ce barreau est réalisé dans les mêmes alliages magnétiques que le tore d'induit afin de limiter les différences de variations de dimensions en fonction des variations de température.

Sur la Fig.5, on a représenté un autre mode de réalisation d'un dispositif de mesure selon l'invention dans lequel le tore 7a de l'induit 7 est disposé au-dessus du barreau 6a de l'inducteur 6. Dans ce cas, le barreau d'inducteur et le tore d'induit sont réalisés dans le même alliage magnétique doux, de champ coercitif de préférence inférieur à 1,2 A/m.

Le barreau d'inducteur est par exemple constitué d'une seule tôle de 0,5 mm d'épaisseur et de dimensions égales à 20 x 3 mm, ceci afin de ne pas introduire d'entrefer supplémentaire limitant la valeur de la tension induite dans l'induit.

Le tore d'induit peut présenter un diamètre extérieur égal à la plus grande dimension du barreau, à savoir 20 mm tandis que son diamètre intérieur est de 16 mm. Ce tore est constitué par exemple d'une seule rondelle d'épaisseur par exemple égale à 0,5 mm.

Le bobinage d'inducteur est formé de 400 spires d'un fil de 0,1 mm de diamètre, tandis que les bobinages d'induit sont formés chacun de 150 spires d'un fil de 0,1 mm de diamètre.

Le tore d'induit et le barreau d'inducteur sont dans ce mode de réalisation espacés géographiquement de 0,2 mm, ce qui correspond à un entrefer magnétique de 2 mm.

On conçoit qu'une telle disposition du tore et du barreau est avantageuse du fait que l'aire des surfaces du barreau et du tore qui se font face est grande par rapport à la valeur de l'entrefer qui sépare ces surfaces.

Ainsi, le flux magnétique traverse aisément ces surfaces et la tension induite recueillie aux bornes des bobinages d'induit permet d'avoir une bonne sensibilité de détection.

**Revendications**

1. Dispositif de mesure de la position angulaire d'un volet de charge d'un moteur à injection électronique, dans lequel le volet (1) est disposé dans une tubulure d'admission (2) de gaz dans le moteur et est mobile en rotation autour d'un volet (X-X) s'étendant à peu près perpendiculairement à la tubulure (2) et comportant des moyens (3) de mesure de la position du volet (1) disposés à l'extérieur de la tubulure (2) et dont une partie est mobile en rotation avec le volet, caractérisé en ce que les moyens de mesure comprennent un inducteur électromagnétique (6) alimenté par un signal variable et un induit électromagnétique (7), mobiles en rotation l'un par rapport à l'autre, en fonction de la position du volet (1) et dont le coefficient de couplage électromagnétique est variable en fonction de leur position relative, pour faire varier la tension induite par l'inducteur dans l'induit et des moyens de traitement du signal de sortie de l'induit pour déterminer la position angulaire du volet.

2. Dispositif selon la revendication 1, caractérisé en ce que l'inducteur (6) est relié au volet, tandis que l'induit (7) est relié à la tubulure.

3. Dispositif selon la revendication 1 ou 2, caractérisé en ce que l'inducteur (6) comporte un noyau magnétique (6a) autour duquel est disposé au moins un bobinage (6b) alimenté par le signal variable.

4. Dispositif selon la revendication 3, caractérisé en ce que le noyau magnétique (6a) a la forme d'un barreau.

5. Dispositif selon la revendication 3, caractérisé en ce que le noyau magnétique est un tore.

6. Dispositif selon l'une quelconque des revendications précédentes, caractérisé en ce que l'induit (7) comporte un noyau magnétique (7a) autour duquel est disposé au moins un bobinage (7b) aux bornes duquel sont connectés des moyens de traitement permettant de déterminer la position angulaire du volet.

7. Dispositif selon la revendication 6, caractérisé en ce que le noyau magnétique (7a) de l'induit est un tore.

8. Dispositif selon la revendication 7, caractérisé en ce que le tore est constitué d'au moins une rondelle magnétique.

9. Dispositif selon la revendication 6, caractérisé en ce que le noyau magnétique de l'induit est un barreau à peu près parallélépipédique.

10. Dispositif selon l'une quelconque des revendications 3 à 9, caractérisé en ce que le noyau (6a) de l'inducteur est disposé dans un plan à peu près perpendiculaire à l'axe de volet (X-X).

11. Dispositif selon l'une quelconque des revendictions 6 à 10, caractérisé en ce que le noyau (7a) de l'induit est disposé dans un plan à peu près perpendiculaire à l'axe de volet (X-X).

12. Dispositif selon les revendications 10 et 11, caractérisé en ce que les noyaux d'inducteur et d'induit (6a, 7a) sont disposés l'un dans l'autre.

13. Dispositif selon les revendications 10 et 11, caractérisé en ce que les noyaux d'inducteur et d'induit (6a, 7a) sont disposés l'un au-dessus de l'autre.

FIG·1

FIG·2

## FIG. 3

## FIG.5

FIG·4

Office européen
des brevets

**RAPPORT DE RECHERCHE EUROPEENNE**

Numero de la demande

EP    92 40 1517

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 392 375 (NIPPONDENSO CO LTD)<br><br>* le document en entier *<br>--- | 1-4,6,<br>10,11,13 | G01B7/30<br>F02D41/24<br>G01D5/24<br>G01D5/20 |
| Y | EP-A-0 259 538 (VDO ADLOF SCHINDLING AG)<br><br>* le document en entier *<br>--- | 1-4,6,<br>10,11,13 | |
| Y | GB-A-2 236 191 (HITACHI LTD)<br><br>* le document en entier *<br>--- | 1-3,10,<br>11 | |
| Y | EP-A-0 308 656 (HONEYWELL INC)<br><br>* le document en entier *<br>--- | 1-3,10,<br>11 | |
| A | GB-A-2 175 096 (RADIODETECTION LTD)<br>* le document en entier *<br>--- | 1-13 | |
| A | EP-A-0 145 882 (VDO ADLOF SCHINDLING)<br>* le document en entier *<br>--- | 1-13 | **DOMAINES TECHNIQUES RECHERCHES (Int. Cl.5)** |
| A | US-A-3 818 401 (FUJI ELECTRIC COMPANY LTD)<br>* le document en entier *<br><br>----- | 1-13 | G01B<br>F02P<br>G01D<br>F02D |

Le présent rapport a été établi pour toutes les revendications

| Lieu de la recherche | Date d'achèvement de la recherche | Examinateur |
|---|---|---|
| LA HAYE | 21 SEPTEMBRE 1992 | BROCK T.J. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.........................................................
& : membre de la même famille, document correspondant

EPO FORM 1503 03.82 (P0402)